# EUROPÄISCHE PATENTSCHRIFT

(11) **EP 3 711 472 B1**
(45) Veröffentlichungstag und Bekanntmachung des Hinweises auf die Patenterteilung: **17.11.2021**
(21) Anmeldenummer: 19213858.4
(22) Anmeldetag: 05.12.2019
(51) Int. Cl.: A01D 41/14

(54) **TASTBÜGEL**
SENSOR ARM
PALPEUR

(30) Priorität: 22.03.2019 DE 102019107376
(43) Veröffentlichungstag der Anmeldung: 23.09.2020
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Megyeri, Tamás, 2740 Abony (HU)
(74) Vertreter: CLAAS Gruppe

(56) Entgegenhaltungen:
- EP-A1- 3 360 406
- CA-A1- 2 511 418
- US-A- 3 611 286
- US-B1- 6 202 395

## Beschreibung

### Tastbügel

Die vorliegende Erfindung betrifft einen Tastbügel für ein Vorsatzgerät, insbesondere ein Schneidwerk, wobei der Tastbügel einen länglichen Körper aufweist, wobei an einem Ende des länglichen Körpers eine quer zur Längsachse verlaufende Aufnahme zur Durchführung einer Welle angeordnet ist, um die der Tastbügel schwenkbar ist, und wobei ein gegenüberliegendes freies Ende zur Abtastung über einen Boden führbar ist.

Vorsatzgeräte werden von einer landwirtschaftlichen Erntemaschine getragen und angetrieben über ein abzuerntendes Feld geführt, um Erntegut abzuschneiden und der Erntemaschine zur weiteren Verarbeitung zuzuführen. Dabei ist es erforderlich den Abstand zwischen dem Vorsatzgerät und dem Feldboden möglichst konstant zu halten, um eine einheitliche Schnitthöhe zu erzielen. Zur Detektion des Abstands zwischen dem Vorsatzgerät und dem Feldboden fortlaufend zu bestimmen, ist es bekannt, starre Tastbügel an dem Vorsatzgerät anzuordnen. Die Tastbügel weisen einen länglichen Körper auf, wobei an einem Ende des länglichen Körpers eine quer zur Längsachse verlaufende Aufnahme zur Durchführung einer Welle angeordnet ist, um die der Tastbügel schwenkbar ist, während ein gegenüberliegendes, freies Ende des Körpers zur Abtastung über einen Boden führbar ist. Mittels eines Sensors, beispielsweise eines Drehpotentiometers, wird die Schwenkbewegung des Tastbügels erfasst, um den Abstand zu bestimmen. Um das freie Ende gegen den Feldboden zu drücken, ist der Körper im Anlenkpunkt federbelastet. Das freie Ende des Tastbügels ist bogenförmig ausgeführt, um einem Einstechen in den Feldboden bei einer Rückwärtsfahrt der Erntemaschine zu begegnen. Zur Begrenzung des Schwenkwinkels und zum Schutz des Tastbügels kommt eine Kette zum Einsatz, die einerseits am freien Ende des Tastbügels und andererseits am Rahmen des Vorsatzgerätes befestigt ist. Die Kette ist insofern nachteilig, als sich an dieser Halmgut aufhängen kann, was den Ausfall der Bodenführungsfunktion sowie die Beschädigung des Tastbügels oder des Sensors zur Folge haben kann. Zudem können die Bogenform des freien Endes und die Kette nicht immer verhindern, dass es beim Rückwärtsfahren oder einer engen Kurvenfahrt zu einer Beschädigung eines der Tastbügel kommt.

Aus der EP 2 865 257 A1 ist ein Tastbügel der eingangs genannten Art bekannt, welcher einen länglichen Körper aufweist, der aus einer Vielzahl von Schaftelementen besteht, wobei benachbarte Schaftelemente um eine quer zur Längsachse des Körpers verlaufende Achse schwenkbar miteinander verbunden sind. Um die Schaftelemente in einer vorgebbaren Betriebsposition zu halten, ist ein Kabel vorgesehen, auf welchem die Schaftelemente hintereinander aufgereiht aufgezogen sind. Ein solcher Tastbügel weist einen sehr komplexen Aufbau auf, wodurch dieser in der Herstellung aufwendig ist. Zudem kann sich zwischen den einzelnen Schaftelementen Halmgut festsetzen, wodurch die Funktionalität des Tastbügels beeinflusst negativ wird.

Die Dokumente US 6 202 395 B1, CA 2 511 418 A und US 3 611 286 A offenbaren ebenfalls artverwandte Tastbügel.

Der vorliegenden Erfindung liegt die Aufgabe zugrunde, einen Tastbügel der eingangs genannten Art derart weiterzubilden, dass die eingangs genannten Nachteile vermieden werden, insbesondere, dass sich der Tastbügel durch einen einfacheren Aufbau auszeichnet.

Diese Aufgabe wird erfindungsgemäß durch einen Tastbügel mit den Merkmalen des unabhängigen Anspruches 1 gelöst. Vorteilhafte Weiterbildungen sind Gegenstand der abhängigen Unteransprüche.

Gemäß dem Anspruch 1 wird ein Tastbügel für ein Vorsatzgerät, insbesondere ein Schneidwerk, vorgeschlagen, wobei der durch eine Federkraft belastete Tastbügel einen länglichen Körper aufweist, wobei an einem Ende des länglichen Körpers eine quer zur Längsachse verlaufende Aufnahme zur Durchführung einer Welle angeordnet ist, um die der Tastbügel schwenkbar ist, und wobei ein gegenüberliegendes freies Ende zur Abtastung über einen Boden führbar ist. Erfindungsgemäß ist vorgesehen, dass der Körper in zumindest drei Abschnitte unterteilt ist, wobei ein oberer Abschnitt, an dem die Aufnahme angeordnet ist, und ein unterer Abschnitt, der das freie, den Boden abtastende Ende des Tastbügels bildet, starr ausgeführt sind und ein Zwischenabschnitt, der zwischen dem oberen Abschnitt und dem unteren Abschnitt angeordnet ist und diese miteinander verbindet, flexibel ausgeführt ist. Dabei wird auf die Anbringung einer Kette am dritten Abschnitt verzichtet, sodass die Problematik der Aufnahme von Halmgut vermieden wird. Die Abschnitte des Körpers sind so ausgeführt, dass der Tastbügel in Hochrichtung, in welcher die Federkraft auf den Körper einwirkt, hinreichend starr ist, um ein Durchbiegen aufgrund der Federkraft zu verhindern. Andererseits ermöglicht der Zwischenabschnitt durch seine flexible Ausführung, dass bei einer Rückwärtsfahrt oder bei einer Kurvenfahrt ein reversibles seitliches Wegschwenken oder Umklappen um eine in Hochrichtung verlaufende Achse möglich ist. Hierdurch lässt sich der Tastbügel vor Beschädigungen bewahren. Andererseits wird eine Beeinflussung der Qualität der Abstandsmessung durch Springen oder Durchbiegen des Tastbügels verhindert.

Hierzu weist der Zwischenabschnitt erfindungsgemäß in Hochrichtung des Körpers eine größere Ausdehnung auf als in Querrichtung. Mit Längsrichtung ist eine entlang einer Längsachse des Körpers verlaufende Erstreckung bezeichnet. Der Körper weist in Längsrichtung eine Längsausdehnung auf. Mit Querrichtung ist eine senkrecht zur Längsachse des Körpers verlaufende Erstreckung bezeichnet. Der Körper weist in Querrichtung eine Breitenausdehnung auf. Mit Hochrichtung ist eine senkrecht zur Längsachse des Körpers verlaufende Erstreckung bezeichnet, welche senkrecht zur Ebene von Längs- und Querrichtung verläuft. Der Zwischenabschnitt weist aufgrund der größeren Ausdehnung in Hochrichtung als in Querrichtung ein hohes Flächenträgheitsmoment auf, wodurch die für das Abtasten des Bodens notwendige Steifigkeit erreicht wird.

Bevorzugt kann der obere Abschnitt an einem im Wesentlichen U-förmigen Profilbauteil angeordnet sein, mit welchem der obere Abschnitt durch die Welle schwenkbar verbunden ist. Das im Wesentlichen U-förmige Profilbauteil kann die Aufnahme der Welle bilden. Zueinander parallel verlaufende Schenkel des Profilbauteils können koaxial angeordnete Durchgangsbohrungen aufweisen, in welchen die Welle drehbar gelagert ist. Die Welle ist mit einem Sensor zur Erfassung einer Drehbewegung, insbesondere einem Drehpotentiometer, verbunden. Durch den Sensor lässt sich die Auslenkung des Tastbügels bestimmen, so dass auf den Abstand zum Boden geschlossen werden kann.

Vorzugsweise kann auf der Welle eine Schenkelfeder angeordnet sein, wobei sich ein Schenkel der Schenkelfeder an dem Profilbauteil und ein anderer Schenkel der Schenkelfeder an dem oberen Abschnitt abstützt. Die Anordnung der Schenkelfeder in dem im Wesentlichen U-förmigen Profilbauteil ist bauraumsparend und schützt die Schenkelfeder vor Verschmutzungen. Mittels der Schenkelfeder wird der Tastbügel mit einer Vorspannung beaufschlagt, welche den Tastbügel gegen den Boden drückt. Hierdurch wird vermieden, dass der Tastbügel beim Überfahren von Stoppeln angehoben wird bzw. beginnt zu springen.

Weiterhin kann an dem Profilbauteil ein Anschlag angeordnet sein, welcher die Schwenkbewegung des Tastbügels begrenzt. Der Anschlag an dem Profilbauteil übernimmt dabei die Funktion der Kette, ohne deren eingangs erwähnten Nachteile aufzuweisen.

Insbesondere können der obere Abschnitt und der untere Abschnitt jeweils zumindest ein längliches Profilelement umfassen, an welchen der Zwischenabschnitt befestigt ist. Das jeweilige Profilelement des oberen Abschnitts und des unteren Abschnitts des Körpers ist mit dem Zwischenelement vorzugsweise lösbar verbunden. Hierzu kann jeweils zumindest eine Schraubverbindung vorgesehen sein.

Vorzugsweise können der obere Abschnitt und der untere Abschnitt jeweils zwei parallel zueinander angeordnete Profilelemente umfassen, zwischen denen der Zwischenabschnitt abschnittsweise angeordnet ist. Die jeweils paarweise angeordneten Profilelemente erstrecken sich abschnittsweise in Längsrichtung des Körpers, wodurch dieser versteift wird, so dass sich der starre obere Abschnitt und der ebenfalls starre untere Abschnitt ausbilden können. Die Profilelemente bestehen bevorzugt aus einem Metall.

Insbesondere kann der Zwischenabschnitt als ein Bauteil aus einem elastischen Material ausgeführt sein. Bevorzugt kann das Bauteil aus einem Kunststoff bestehen. Besonders bevorzugt wird als Material zur Herstellung des Bauteils ein Elastomer verwendet, beispielsweise auf Polyurethanbasis.

Hierzu sind die Profilelemente des oberen Abschnittes und des unteren Abschnittes bevorzugt aus einem Metall hergestellt. Die insbesondere plattenförmigen Profilelemente können miteinander verschraubt werden. Dabei nehmen die plattenförmigen Profilelemente das den Zwischenabschnitt bildende Bauteil abschnittsweise zwischen sich auf.

Weiterhin kann sich das den Zwischenabschnitt bildende Bauteil ausgehend vom oberen Abschnitt bis zum unteren Abschnitt im Wesentlichen durchgehend in Längsrichtung des Körpers erstrecken.

Des Weiteren betrifft die vorliegende Erfindung ein Vorsatzgerät für eine landwirtschaftliche Erntemaschine, welches dadurch gekennzeichnet ist, dass an dem Vorsatzgerät zumindest ein Tastbügel gemäß einem der Ansprüche 1 bis 10 angeordnet ist.

Die vorliegende Erfindung wird nachstehend anhand eines in den Zeichnungen dargestellten Ausführungsbeispieles näher erläutert.

Es zeigen:
- Fig. 1: eine schematische Darstellung eines Tastbügels in perspektivischer Ansicht;
- Fig. 2: eine Teilansicht eines Vorsatzgerätes von unten mit daran angeordneten Tastbügeln;
- Fig. 3: eine Teilansicht eines Vorsatzgerätes von unten mit umgeklapptem Tastbügel.

Für die Ernte von, insbesondere stängeligem, Erntegut kommen selbstfahrende Erntemaschinen wie Mähdrescher zum Einsatz, welche mit einem Vorsatzgerät 15 zum Abtrennen und zur Aufnahme des Erntegutes ausgestattet sind. Zur optimalen Aufnahme des Ernteguts ist das Vorsatzgerät 15, welches insbesondere als ein Schneidwerk ausgeführt sein kann, beweglich ausgeführt, indem das Vorsatzgerät 15 in seiner Höhe wie auch in seiner Querneigung geführt wird. Die vertikale Höhenverstellung, das heißt der Längsneigungsausgleich in Fahrtrichtung wie auch die Veränderung der Querneigung des Vorsatzgerätes 15, erfolgen in Abhängigkeit von dem aktuellen Bodenniveau und dienen damit einer gleichmäßigen Stoppelhöhe des abgeernteten Ernteguts. Zur Bestimmung des Abstands zwischen dem Vorsatzgerät 15 und dem Boden 16 sind an der Unterseite des Vorsatzgerätes 15, d.h. der dem Boden 16 zugewandten Seite, mehrere Tastbügel 1 beabstandet zueinander angeordnet.

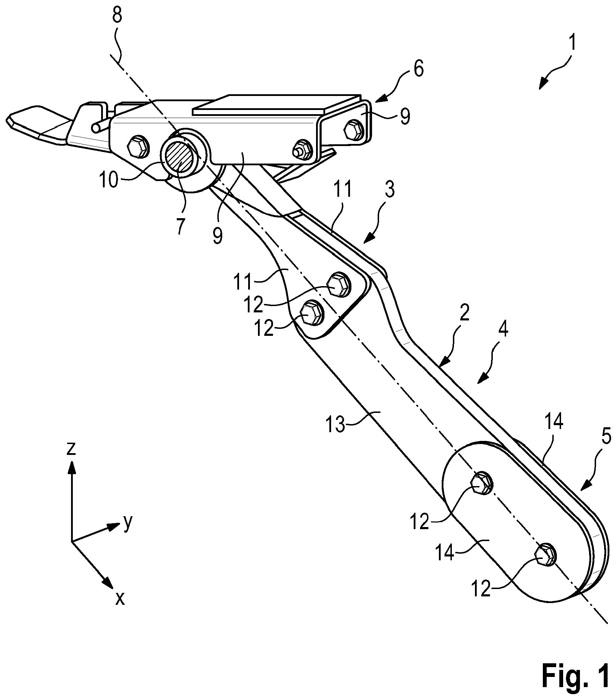

Die Darstellung in Fig. 1 zeigt eine schematische Darstellung des Tastbügels 1 in perspektivischer Ansicht. Der Tastbügel 1 weist einen länglichen Körper 2 auf, wobei an einem Ende des länglichen Körpers 2 eine quer zur Längsachse 8 verlaufende Aufnahme zur Durchführung einer Welle 7 angeordnet ist. Die Aufnahme ist als ein im Wesentlichen U-förmiges Profilbauteil 6 ausgeführt. Gegenüber dem U-förmigen Profilbauteil 6 ist der Tastbügel 1 relativ schwenkbar. Mittels des Profilbauteils 6 ist der längliche Körper 2 des Tastbügels 1 endseitig an der Unterseite des Vorsatzgerätes 15 angeordnet. Die Welle 7 ist in dem Profilbauteil 6 gelagert. Ein gegenüberliegendes freies Ende des Körpers 2 des Tastbügels 1 ist zur Abtastung über den Boden führbar.

Der Körper 2 ist in zumindest drei Abschnitte 3, 4, 5 unterteilt ist, wobei ein oberer Abschnitt 3, an dem die als Profilbauteil 6 ausgeführte Aufnahme zur Durchführung der Welle 7 angeordnet ist, und ein unterer Abschnitt 5, der das freie, den Boden 16 abtastende Ende des Tastbügels 1 bildet, starr ausgeführt sind. Ein Zwischenabschnitt 4, der zwischen dem oberen Abschnitt 3 und dem unteren Abschnitt 5 angeordnet ist und diese miteinander verbindet, ist flexibel ausgeführt.

Mit Längsrichtung x ist eine entlang der Längsachse 8 des Körpers 2 verlaufende Erstreckung bezeichnet. Der Körper 2 weist in Längsrichtung x eine Längsausdehnung auf. Mit Querrichtung y ist eine senkrecht zur Längsachse 8 des Körpers 2 verlaufende Erstreckung bezeichnet. Der Körper 2 weist in Querrichtung y eine Breitenausdehnung auf. Mit Hochrichtung z ist eine senkrecht zur Längsachse 8 des Körpers 2 verlaufende Erstreckung bezeichnet, welche senkrecht zur Ebene von Längsrichtung x und Querrichtung y verläuft. Der Zwischenabschnitt 4 weist in Hochrichtung z des Körpers 2 eine größere Ausdehnung auf als in Querrichtung y des Körpers 2. Der Zwischenabschnitt 4 weist aufgrund der größeren Ausdehnung in Hochrichtung z als in Querrichtung y ein hohes Flächenträgheitsmoment auf, wodurch die für das Abtasten des Bodens 16 notwendige Steifigkeit des Tastbügels 1 erreicht wird. Der Zwischenabschnitt 4 ist als ein Bauteil 13 aus einem elastischen Material ausgeführt. Bevorzugt besteht das Bauteil 13 aus einem Elastomer.

Zueinander parallel verlaufende Schenkel 9 des Profilbauteils 6 weisen koaxial angeordnete Durchgangsbohrungen auf, in welchen die Welle 7 drehbar gelagert ist. Die Welle 7 ist mit einem - nicht dargestellten - Sensor zur Erfassung einer Drehbewegung, insbesondere einem Drehpotentiometer, verbunden. Durch den Sensor lässt sich die Auslenkung des Tastbügels 1 bestimmen, die durch eine Bodenunebenheit hervorgerufen wird.

Der obere Abschnitt 3 des Tastbügels 1 umfasst zwei parallel zueinander angeordnete Profilelemente 11, zwischen denen der Zwischenabschnitt 4 abschnittsweise angeordnet ist. Die Profilelemente 11 sind plattenförmig ausgeführt. Insbesondere können die Profilelemente 11 als Stanzbauteile ausgeführt sein. Das Bauteil 13, welches den Zwischenabschnitt 4 ausbildet, ist durch Schraubverbindungen 12 mit den Profilelementen 11 lösbar verbunden. Auf diese Weise lässt sich ein einfacher Austausch zumindest des Zwischenabschnitts 4 durchführen.

Der untere Abschnitt 5 des Tastbügels 1 umfasst ebenfalls zwei parallel zueinander angeordnete Profilelemente 14, zwischen denen der Zwischenabschnitt 4 abschnittsweise angeordnet ist. Auch diese Profilelemente 14 sind durch Schraubverbindungen 12 mit dem Bauteil 13 lösbar verbunden. Die Profilelemente 14 sind im Wesentlichen plattenförmig ausgeführt. Insbesondere können die Profilelemente 14 als Stanzbauteile ausgeführt sein.

Die Profilelemente 11 und 14 dienen dazu, das Bauteil 13, welches den Zwischenabschnitt 4 ausbildet, im oberen Abschnitt 3 und im unteren Abschnitt 5 zu versteifen sowie insbesondere im unteren Abschnitt 5 vor Verschleiß zu schützen. Hierzu bestehen die Profilelemente 11 und 14 aus einem Metall.

Der Tastbügel 1 wird mit einer Federkraft beaufschlagt, um einen stetigen Kontakt mit dem zu kopierenden Boden 16 aufrechtzuerhalten. Hierzu ist an der Welle 7 eine Schenkelfeder 10 angeordnet. Ein Schenkel der Schenkelfeder 10 stützt sich an dem Profilbauteil 6 ab und ein anderer Schenkel der Schenkelfeder 10 stützt sich an dem oberen Abschnitt 3 ab. Die Anordnung der Schenkelfeder 10 in dem im Wesentlichen U-förmigen Profilbauteil ist bauraumsparend und schützt die Schenkelfeder 10 vor Verschmutzungen. Mittels der Schenkelfeder 10 wird der Tastbügel 1 mit einer Vorspannung beaufschlagt, welche den Tastbügel 1 gegen den Boden 16 drückt. Hierdurch wird vermieden, dass der Tastbügel 1 beim Überfahren von Stoppeln angehoben wird bzw. beginnt zu springen. Durch die Versteifung des Bauteils 13 einerseits und das erhöhte Flächenträgheitsmoment des Bauteils 13 im Zwischenabschnitt 4 andererseits wird ein Durchbiegen aufgrund der Vorspannung durch die Schenkelfeder 10 vermieden.

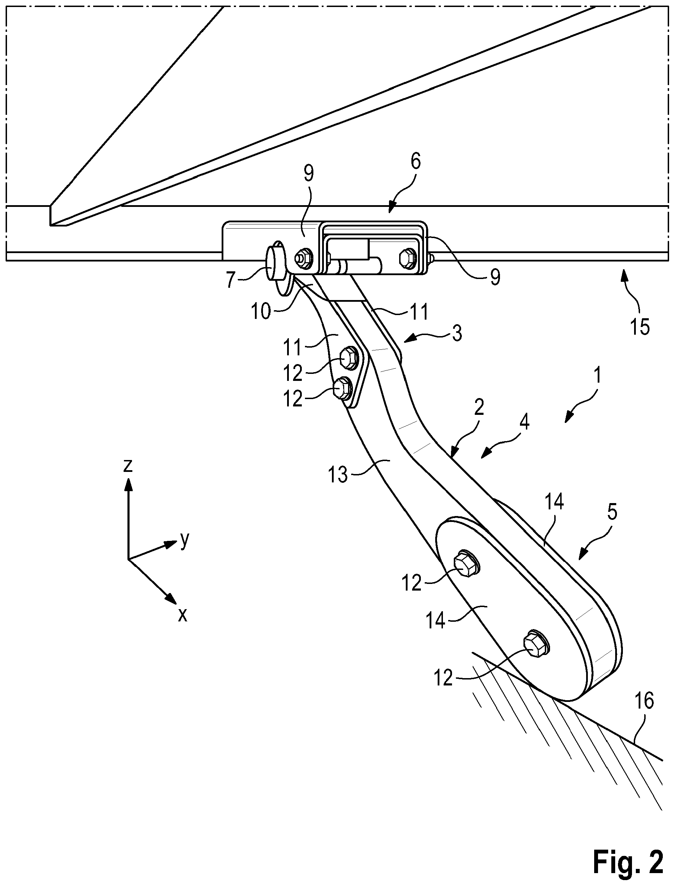

In Fig. 2 ist eine Teilansicht des Vorsatzgerätes 15, hier eines Schneidwerks, von unten mit einem daran angeordneten Tastbügel 1 dargestellt. Das Vorsatzgerät 15 ist dabei in einer Position dargestellt, in welcher der Tastbügel 1 zumindest mit seinem unteren Abschnitt 5 auf dem Boden 16 aufliegt. Wie aus der Darstellung ersichtlich ist, ist der Tastbügel 1 aufgrund der Vorspannung durch die jeweilige Schenkelfeder 10 in Richtung des Bodens 16 ausgelenkt. Befindet sich das Vorsatzgerät 15 auf seiner eingestellten Schnitthöhe, so wird der Tastbügel 1 gegen den Boden gedrückt. Hierdurch wird vermieden, dass der Tastbügel 1 beim Überfahren von Stoppeln angehoben wird bzw. beginnt zu springen.

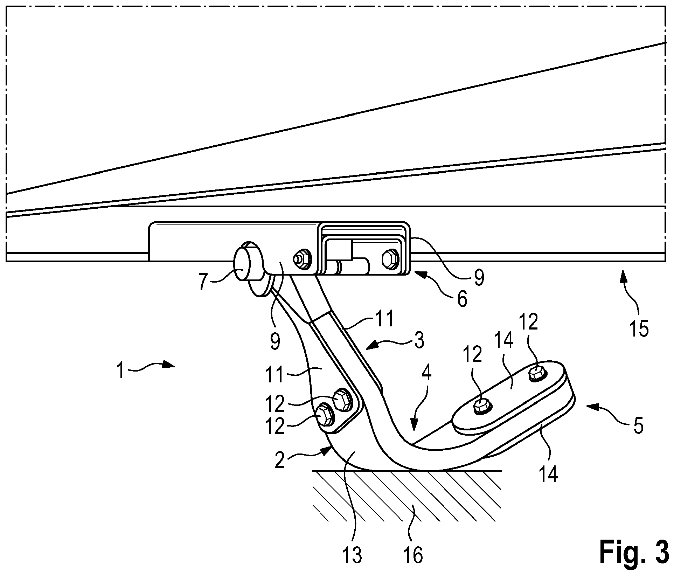

Die Darstellung in Fig. 3 zeigt eine Teilansicht des Vorsatzgerätes 15 von unten mit seitlich umgeklapptem Tastbügel 1. Durch die Ausführung des Bauteils 13 aus einem Elastomer weist der Zwischenabschnitt 4 eine große Flexibilität auf, welche es bei einer Rückwärtsfahrt oder einer Kurvenfahrt der Erntemaschine ermöglicht, reversibel seitlich, d.h. in Querrichtung y, umzuklappen oder wegzuschwenken. Hierdurch lässt sich der Tastbügel 1 vor Beschädigungen bewahren. Andererseits wird eine Beeinflussung der Qualität der Abstandsmessung durch Springen oder Durchbiegen des Tastbügels 1 in Hochrichtung z aufgrund des hohen Flächenträgheitsmomentes verhindert.

### Bezugszeichenliste

- 1: Tastbügel
- 2: Körper
- 3: Oberer Abschnitt
- 4: Zwischenabschnitt
- 5: Unterer Abschnitt
- 6: Profilbauteil
- 7: Welle
- 8: Längsachse von 1
- 9: Schenkel
- 10: Schenkelfeder
- 11: Profilelement
- 12: Schraubverbindung
- 13: Bauteil
- 14: Profilelement
- 15: Vorsatzgerät
- 16: Boden

## Patentansprüche

1. Tastbügel (1) für ein Vorsatzgerät (15), insbesondere ein Schneidwerk, wobei der durch eine Federkraft belastete Tastbügel (1) einen länglichen Körper (2) aufweist, wobei an einem Ende des länglichen Körpers (2) eine quer zur Längsachse (8) verlaufende Aufnahme zur Durchführung einer Welle (7) angeordnet ist, um die der Tastbügel (1) schwenkbar ist, und wobei ein gegenüberliegendes freies Ende des Tastbügels (1) zur Abtastung über einen Boden (16) führbar ist, wobei der Körper (2) in zumindest drei Abschnitte unterteilt ist, wobei ein oberer Abschnitt (3), an dem die Aufnahme angeordnet ist, und ein unterer Abschnitt (5), der das freie, den Boden (16) abtastende Ende des Tastbügels (1) bildet, starr ausgeführt sind und ein Zwischenabschnitt (4), der zwischen dem oberen Abschnitt (3) und dem unteren Abschnitt (5) angeordnet ist und diese miteinander verbindet, flexibel ausgeführt ist;
**dadurch gekennzeichnet dass**
der Zwischenabschnitt (4) in Hochrichtung (z) des Körpers (2) eine größere Ausdehnung aufweist als in Querrichtung (y).

2. Tastbügel (1) nach Anspruch 1, **dadurch gekennzeichnet, dass** der obere Abschnitt (3) an einem im Wesentlichen U-förmigen Profilbauteil (6) angeordnet ist, mit welchem der obere Abschnitt (3) durch die Welle (7) schwenkbar verbunden.

3. Tastbügel (1) nach Anspruch 1oder 2, **dadurch gekennzeichnet, dass** auf der Welle (7) eine Schenkelfeder (10) angeordnet ist, wobei sich ein Schenkel der Schenkelfeder (10) an dem Profilbauteil (6) und ein anderer Schenkel der Schenkelfeder (10) an dem oberen Abschnitt (3) abstützt.

4. Tastbügel (1) nach Anspruch 2 oder 3, **dadurch gekennzeichnet, dass** an dem Profilbauteil (6) ein Anschlag angeordnet ist, welcher die Schwenkbewegung des Tastbügels (1) begrenzt.

5. Tastbügel (1) nach Anspruch einem der Ansprüche 1 bis 4, **dadurch gekennzeichnet, dass** der obere Abschnitt (3) und der untere Abschnitt (5) jeweils zumindest ein längliches Profilelement (11, 14) umfassen, an welchen der Zwischenabschnitt (4) befestigt ist.

6. Tastbügel (1) nach Anspruch 5, **dadurch gekennzeichnet, dass** der obere Abschnitt (3) und der untere Abschnitt (5) jeweils zwei parallel zueinander angeordnete Profilelemente (11, 14) umfassen, zwischen denen der Zwischenabschnitt (4) abschnittsweise angeordnet ist.

7. Tastbügel (1) nach einem der Ansprüche 1 bis 6, **dadurch gekennzeichnet, dass** der Zwischenabschnitt (4) als ein Bauteil (13) aus einem elastischen Material ausgeführt ist.

8. Tastbügel (1) nach einem der vorangehenden Ansprüche, **dadurch gekennzeichnet, dass** die Profilelemente (11, 14) des oberen Abschnittes (3) und des unteren Abschnittes (5) aus einem Metall hergestellt sind.

9. Tastbügel (1) nach einem der vorangehenden Ansprüche, **dadurch gekennzeichnet, dass** sich das den Zwischenabschnitt (4) bildende Bauteil (13) ausgehend vom oberen Abschnitt (3) bis zum unteren Abschnitt (5) im Wesentlichen durchgehend in Längsrichtung des Körpers (2) erstreckt.

10. Vorsatzgerät (15) für eine landwirtschaftliche Erntemaschine, **dadurch gekennzeichnet, dass** an dem Vorsatzgerät (15) zumindest ein Tastbügel (1) gemäß einem der Ansprüche 1 bis 9 angeordnet ist.

## Claims

1. A sensor arm (1) for a front attachment (15), in particular a cutting assembly, wherein the spring-loaded sensor arm (1) has an elongate body (2), wherein a retainer for holding a shaft (7) about which the sensor arm (1) is pivotable and which runs transversely to the longitudinal axis (8) is disposed at one end of the elongate body (2), and wherein an opposite free end of the sensor arm (1) can be guided over ground (16) for the purposes of scanning, wherein the body (2) is divided into at least three sections, wherein an upper section (3) on which the retainer is disposed and a lower section (5) which forms the free end of the sensor arm (1) which scans the ground (16) are rigid in configuration, and an intermediate section (4), which is disposed between the upper section (3) and the lower section (5) and which connects them together, is flexible in configuration;
**characterized in that**
the intermediate section (4) has a larger extent in the height direction (z) of the body (2) than in the transverse direction (y).

2. The sensor arm (1) according to claim 1, **characterized in that** the upper section (3) is disposed on a substantially U-shaped profile component (6) with which the upper section (3) is pivotably connected by means of the shaft (7).

3. The sensor arm (1) according to claim 1 or claim 2, **characterized in that** a leg spring (10) is disposed on the shaft (7), wherein one leg of the leg spring (10) bears on the profile component (6) and another leg of the leg spring (10) bears on the upper section (3).

4. The sensor arm (1) according to claim 2 or claim 3, **characterized in that** a stop is disposed on the profile component (6) which limits the pivotal movement of the sensor arm (1).

5. The sensor arm (1) according to one of claims 1 to 4, **characterized in that** the upper section (3) and the lower section (5) respectively comprise at least one elongate profile element (11, 14), on which the intermediate section (4) is fastened.

6. The sensor arm (1) according to claim 5, **characterized in that** the upper section (3) and the lower section (5) respectively comprise two profile elements (11, 14) disposed parallel to each other, between which sections of the intermediate section (4) are disposed.

7. The sensor arm (1) according to one of claims 1 to 6, **characterized in that** the intermediate section (4) is configured as a component (13) produced from an elastic material.

8. The sensor arm (1) according to one of the preceding claims, **characterized in that** the profile elements (11, 14) of the upper section (3) and the lower section (5) are produced from a metal.

9. The sensor arm (1) according to one of the preceding claims, **characterized in that** the component (13) forming the intermediate section (4) extends substantially continuously from the upper section (3) to the lower section (5) in the longitudinal direction of the body (2).

10. A front attachment (15) for an agricultural harvesting machine, **characterized in that** at least one sensor arm (1) in accordance with one of claims 1 to 9 is disposed on the front attachment (15).

## Revendications

1. Palpeur (1) destiné à un outil frontal (15), en particulier une barre de coupe, le palpeur (1), qui est sollicité par une force élastique, présentant un corps (2) allongé, un logement étant disposé à une extrémité du corps (2) allongé, logement qui s'étend perpendiculairement à l'axe longitudinal (8) et est destiné au passage d'un axe (7) autour duquel peut pivoter le palpeur (1), et une extrémité libre opposée du palpeur (1) pouvant être guidée sur un sol (16) en vue du palpage, le corps (2) étant divisé en au moins trois parties, parmi lesquelles une partie supérieure (3), sur laquelle est disposé le logement, et une partie inférieure (5), qui forme l'extrémité libre, palpant le sol, du palpeur (1), sont réalisées de façon rigide, et une partie intermédiaire (4), qui est disposée entre la partie supérieure (3) et la partie inférieure (5) et les relie entre elles, est réalisée sous une forme souple,
**caractérisé en ce que**
la partie intermédiaire (4) présente, dans le sens de la hauteur (z) du corps (2), une dimension qui est plus grande que dans le sens transversal (y).

2. Palpeur (1) selon la revendication 1, **caractérisé en ce que** la partie supérieure (3) est disposée sur un composant profilé (6) sensiblement en forme de U, auquel la partie supérieure (3) est reliée de manière pivotante par l'axe (7).

3. Palpeur (1) selon la revendication 1 ou 2, **caractérisé en ce qu'**un ressort à branches (10) est disposé sur l'axe (7), une branche du ressort (10) prenant appui sur le composant profilé (6) et une autre branche du ressort (10) étant en appui sur la partie supérieure (3).

4. Palpeur (1) selon la revendication 2 ou 3, **caractérisé en ce qu'**il est prévu sur l'élément profilé (6), une butée qui limite le mouvement pivotant du palpeur (1).

5. Palpeur (1) selon l'une des revendications 1 à 4, **caractérisé en ce que** la partie supérieure (3) et la partie inférieure (5) comportent chacune au moins un élément profilé (11, 14) allongé, auxquels est fixée la partie intermédiaire (4).

6. Palpeur (1) selon la revendication 5, **caractérisé en ce que** la partie supérieure (3) et la partie inférieure (5) comportent chacune deux éléments profilés (11, 14) qui sont disposés parallèlement l'un à l'autre et entre lesquels est disposée par portions la partie intermédiaire (4).

7. Palpeur (1) selon l'une des revendications 1 à 6, **caractérisé en ce que** la partie intermédiaire (4) est réalisée sous la forme d'un composant (13) en matériau élastique.

8. Palpeur (1) selon l'une des revendications précédentes, **caractérisé en ce que** les éléments profilés (11, 14) de la partie supérieure (3) et de la partie inférieure (5) sont fabriqués à partir d'un métal.

9. Palpeur (1) selon l'une des revendications précédentes, **caractérisé en ce que** le composant (13) constituant la partie intermédiaire (4) s'étend sensiblement en continu dans le sens longitudinal du corps (2), en partant de la partie supérieure (3) en direction de la partie inférieure (5).

10. Outil frontal (15) destiné à une machine de récolte agricole, **caractérisé en ce qu'**au moins un palpeur (1) selon l'une des revendications 1 à 9 est disposé sur l'outil frontal (15).
